## Europäisches Patentamt

(19) **European Patent Office**

**Office européen des brevets**

(11) Numéro de publication: **0 247 109**
**B1**

(12) **FASCICULE DE BREVET EUROPÉEN**

(45) Date de publication du fascicule du brevet:
07.02.90

(51) Int. Cl. 5: **B 01 J 8/04,** B 01 J 47/02,
B 01 D 15/00

(21) Numéro de dépôt: 86906857.7

(22) Date de dépôt: 26.11.86

(86) Numéro de dépôt international:
PCT/FR 86/00404

(87) Numéro de publication international:
WO 87/03217 (04.06.87 Gazette 87/12)

(54) COLONNE DE TRAITEMENT PHYSIQUE OU CHIMIQUE EN PHASE HETEROGENE.

(30) Priorité: 27.11.85 FR 8517898

(43) Date de publication de la demande:
02.12.87 Bulletin 87/49

(45) Mention de la délivrance du brevet:
07.02.90 Bulletin 90/06

(84) Etats contractants désignés:
AT BE CH DE FR GB IT LI LU NL SE

(56) Documents cité:
WO-A-84/03455
US-A-1 787 698
US-A-2 460 036
US-A-2 782 726
US-A-3 771 659
US-A-3 814 253
US-A-3 928 193

(73) Titulaire: LABORATOIRES FLORK S.A.
Montglandier
F-63380 Pontaumur (FR)

(72) Inventeur: FLORK, Michel
60, rue de Bellevue
F-63400 Chamalières (FR)

(74) Mandataire: Chanet, Jacques
Conseil en Brevets 129 Avenue de Royat B.P. 27
F-63400 Chamalières (FR)

### Description

La présente invention a pour objet une colonne de réaction destinée au traitement d'une solution au contact d'un composant solide statique, et accessoirement le procédé d'utilisation d'une telle colonne.

On connaît les colonnes de réaction dans lesquelles on peut faire passer un composant liquide dit solution, à traiter au contact d'un composant statique solide et généralement divisé en grains tels que catalyseur, résine échangeuse d'ions, tamis moléculaire, ou autres; de telles colonnes sont généralement constituées d'une enceinte verticale comportant des orifices de passage de la solution à ses extrémités supérieure et inférieure; de telles colonnes ne peuvent être que de faible diamètre pour éviter un écoulement préférentiel au centre et des zones neutres qui ne manquent pas d'intervenir dès que le diamètre de la colonne devient important par rapport à sa hauteur et aux diamètres de ses orifices d'entrée et sortie. La formation de zones neutres et corrélativement de zones d'écoulement préférentiel généralement situées au centre de la colonne est préjudiciable car elle provoque en sortie des mélanges hétérogènes de solution ayant subi à des degrés très divers l'action du composant statique. Une colonne de ce type est décrite dans la publication US-A-1 787 698.

De telles colonnes ont des parois assez épaisses pour supporter l'expansion du composant solide qui peut avoir lieu au cours du traitement. Cette expansion du volume du composant statique s'accompagne généralement d'une déformation de ses grains entraînant leur dislocation et finalement une augmentation de la perte de charge qu'elles opposent à la circulation du flux. Pour assurer une vitesse d'écoulement suffisante il faut alors augmenter la pression jusqu'à des niveaux très élevés qui constituent un second frein technologique aux possibilités d'augmenter le diamètre de la colonne.

Le but de la présente invention est de remédier aux inconvénients précités en donnant à la colonne une forme et des proportions qui, en coopération avec des caractéristiques densimétriques et granulométriques des composants solides qu'elle contient, autorisent une percolation régulière de la solution et un reclassement naturel des composants solides en situation de passage inversé.

Selon la présente invention, une colonne de réaction du type destiné à faire passer un composant liquide, dit solution, à traiter au contact d'un composant statique solide et divisé en grains tel que catalyseur, résine échangeuse d'ions, tamis moléculaire, ou autre, ladite colonne étant essentiellement constituée d'une enceinte verticale comportant au moins deux orifices de passage de ladite solution, l'un à sa partie supérieure, autre à sa partie inférieure, est caractérisée principalement en ce que la pression régnant à la partie inférieure de la colonne est sensiblement égale à la hauteur de charge de la solution dans cette dernière de telle sorte que l'écoulement de la solution à travers le composant statique résulte principalement de sa gravité, en ce que la partie inférieure de ladite enceinte est d'une forme générale sensiblement conique, et en ce que le volume intérieur de cette partie conique est partiellement garni d'une masse de matériaux divisés inertes à l'égard de ladite solution, ces matériaux étant disposés en couches horizontales constituées de particules de taille croissante de façon au moins discontinue depuis leur couche supérieure jusqu'à leur couche inférieure, tandis que les densités des particules sont au moins égales à celles du composant statique actif disposé au-dessus de la couche supérieure du matériau inerte, ou de la solution, la densité des particules des couches inférieures étant au moins égale à celle des couches supérieures.

Ainsi la granulométrie des matériaux inertes disposés dans la partie conique est plus grossière que celle du composant statique réactif et dans chaque couche plus grossière que celle de la couche supérieure. De même la densité des matériaux inertes est supérieure à celle du composant statique réactif et dans chaque couche supérieure ou égale à celle de la couche qui la surmonte. L'augmentation relative des vides intersticiels compense ainsi la réduction de la section au fur et à mesure de la descente dans le tronc de cône. Cette disposition permet d'obtenir un écoulement régulier jusqu'à la buse de sortie, ce qui contribue finalement à éviter les perturbations au-dessus.

Suivant une autre disposition générale, on laisse subsister au-dessus du composant statique une hauteur H1 libre de composant statique de telle sorte que cet espace, bien que rempli ultérieurement de solution, puisse être utilisé par le composant statique pour son expansion; on notera que cette hauteur libre H1 est déterminée par la faculté d'expansion du composant statique, et ne peut donc être déterminée à priori.

Suivant des caractéristiques plus particulières, la plus petite dimension des particules d'une couche est supérieure à la plus grande dimension des interstices existants entre les particules de la couche immédiatement inférieure tandis que la plus grande dimension des interstices existants entre les particules de la couche supérieure est inférieure à la plus petite dimension des grains du composant statique. De préférence les matériaux inertes sont divisés en trois couches de particules de granulométries différentes, la granulométrie des particules d'une même couche étant sensiblement homogène. De préférence encore ces matériaux inertes sont disposés au-dessus d'une grille dont les ouvertures ont des dimensions inférieures à la plus petite dimension des particules de la couche adjacente, tandis que ladite grille repose sur un support, dit croisillon, constitué de plaques reliées centralement par leur tranche.

Suivant d'autres caractéristiques secondaires, la partie supérieure de l'enceinte étant cylindrique, le rapport de sa hauteur H à son diamètre D est au moins égal à 1,2 (H = 1,2 D); l'angle d'ouverture du cône de la partie inférieure est compris entre 25 et 35°; la surface inférieure de la couche inférieure de matériau inerte est située à une distance h1 de l'extrémité inférieure du cône, h1 étant comprise entre 0,25 D et 0,35 D.

Suivant une autre caractéristique particulière liée au mode d'utilisation d'une colonne de l'invention, une conduite supérieure et une conduite inférieure raccordée axialement à l'extrémité inférieure du cône, sont reliées à une vanne quatre voies recevant elle-même une conduite d'arrivée et une conduite de départ, la fonction de ladite vanne quatre voies étant de mettre, de façon alternée, en relation soit la conduite supérieure avec la conduite d'arrivée et la conduite inférieure avec la conduite de départ, soit la conduite inférieure avec la conduite d'arrivée et la conduite supérieure avec la conduite de départ; des pompes dites de charge pour l'une et de vidange pour l'autre sont montées respectivement en amont et en aval de la vanne à quatre voies sur respectivement la conduite d'arrivée et la conduite de départ.

Lorsque plusieurs colonnes sont montées en série, la conduite de départ de l'une constitue la conduite d'arrivée de la suivante et la pompe de vidange de la première constitue la pompe de charge de la seconde, etc...

Suivant une autre disposition avantageuse, la colonne de l'invention comporte au moins deux capteurs de présence de la solution, dits détecteurs de niveaux, l'un dit de niveau haut étant situé au-dessous du débouché de la conduite supérieure dans la colonne, l'autre dit de niveau bas étant situé au-dessous du dit débouché et au-dessus du niveau supérieur dudit composant statique.

Les différentes caractéristiques sus-énoncées et de préférence réunies ont pour résultat d'assurer une vitesse linéaire de la solution égale à elle-même pratiquement en n'importe quel point de la masse du composant statique, d'autoriser un diamètre relativement faible des conduites d'arrivée et de départ compatible avec celui des entrée et sortie de pompe, sans affecter le caractère isocinétique du passage de la solution à travers le composant statique, d'éviter des volumes "morts" souvent causes de l'hétérogénéité de traitement, enfin de permettre une régénération simple et quasi indéfinie du composant statique (dans les limites théoriques d'utilisation de celui-ci) par la simple manoeuvre des vannes quatre voies.

La présente invention sera mieux comprise et des détails en relevant apparaîtront à la description qui va être faite d'une forme préférée de réalisation d'une colonne de l'invention et d'un exemple de son utilisation, en relation avec la figure de la planche annexée qui illustre en coupe et de façon schématique une telle colonne.

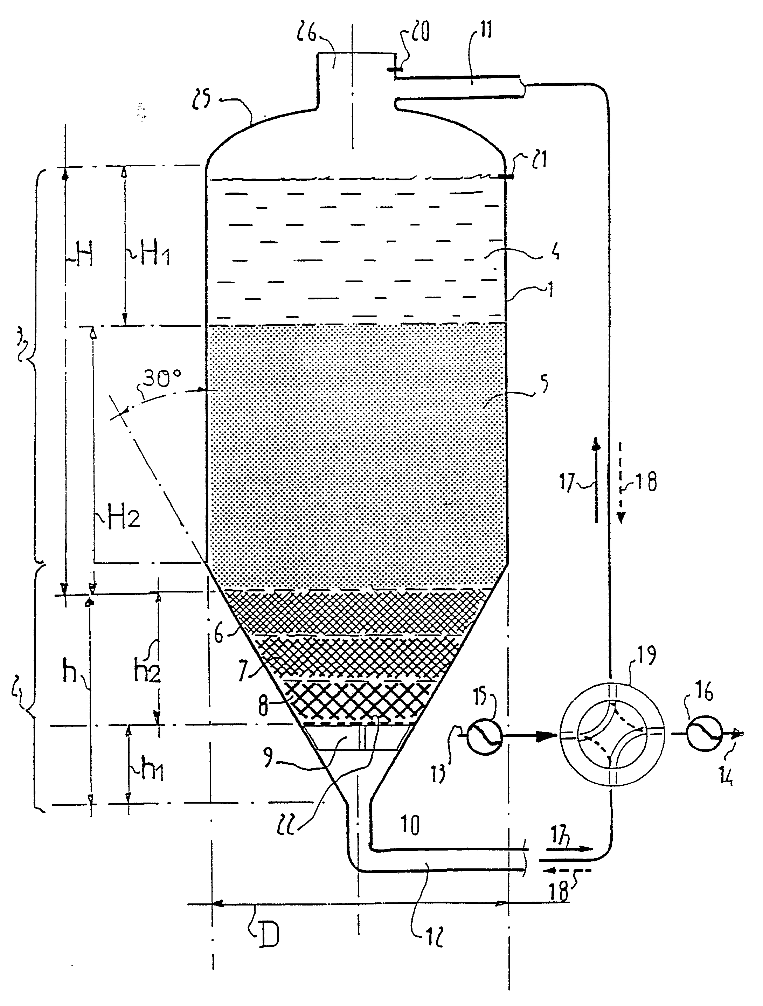

Sur la fig. 1, une colonne 1 de traitement conforme à l'invention se compose essentiellement d'une partie cylindrique 3 surmontant une partie conique 2; la partie conique 2 est remplie sur une partie supérieure h2 de sa hauteur de trois couches 6, 7, 8 d'un matériau inerte organique ou minéral; le matériau inerte est supporté par une plaque perforée 22 supportée elle-même par un croisillon 9 à une hauteur h1 au-dessus de l'extrémité inférieure 10 du cône. Le cône a une ouverture d'angle de 30° et son extrémité inférieure se prolonge par une conduite inférieure 12. L'extrémité supérieure de la colonne 1 est partiellement obturée par une virole, ou couvercle, 25 comportant un trou d'homme 26 qui peut être ou non obturé; une conduite supérieure 11 débouche dans la colonne au niveau du trou d'homme.

Pour fixer les idées sur les proportions des éléments sus-indiqués, on définira celles-ci en fonction du diamètre D de la partie cylindrique; dès lors et dans ce cas particulier H = 1,32 D, h1 = 0,28 D, h2 = 0,44 D.

La partie cylindrique est partiellement remplie sur une hauteur H2 d'un composant statique 5 solide et divisé qui peut être un réactif chimique ou biochimique, un catalyseur, une résine échangeuse d'ions anioniques ou cationiques, une résine complexante, un charbon, un tamis moléculaire, du gel de silice, etc..., ce composant statique constituant au sens large un réactif agissant par absorption, adsorption, liaison chimique permanente ou temporaire ou tout autre effet physique. On remarquera que la hauteur H2 du composant statique est surmontée d'une hauteur H1 d'un espace libre destiné à permettre en cas de besoin l'expansion du composant statique cet espace de hauteur H1 peut être occupé par la solution à traiter 4 qui remplit bien entendu tous les autres espaces résiduels de la colonne entre les grains du composant statique et les particules du matériau divisé du cône grâce à cette disposition la circulation de la solution se fait régulièrement sur toute la colonne sans circuit préférentiel notamment au centre.

On notera encore, comme déjà dit plus haut, que de préférence la densité des grains et des particules sus-visées, de même que leur granulométrie est croissante du haut vers le bas. Cette disposition permet de faire circuler un liquide de solution à traiter, ou de solution régénérante, de bas en haut, ce qui a pour effet particulièrement intéressant de simultanément favoriser un détassement du composant statique et de permettre un reclassement des diverses couches réactives ou inertes, s'il y a eu des phénomènes accidentels de migration.

Cet inversion du sens de fonctionnement de la colonne peut être réalisé commodément grâce à une vanne quatre voies 19 raccordée d'une part à la conduite supérieure 11 et à la conduite inférieure 12 et d'autre part à une conduite d'entrée 13 et à une conduite de sortie 14; la conduite d'entrée (ou d'arrivée) 13 passe par une pompe de charge 15 tandis que la conduite de sortie 14 passe par une pompe de vidange 16. Selon la position du "tournant" de la vanne quatre voies, on établit dans la colonne un circuit direct suivant les flèches en trait plein 17 ou inversé suivant les flèches en tiret 18.

Une colonne de l'invention comporte encore avantageusement des dispositifs d'automatisme et de régulation; l'élément principal mais non limitatif de régulation est constitué par des détecteurs de niveau ou encore capteur de présence de la solution, l'un dit de niveau haut assure pour la marche à contre-courant l'arrêt de l'alimentation de la colonne tandis qu'en sens direct celui de niveau bas assure l'arrêt de la vidange. On évite ainsi soit le débordement, soit la mise en contact de réactif avec l'air ambiant, attendu que ce dispositif peut être comporté par tout dispositif de régulation proportionnel intégral ou dérivé éliminant les phénomènes de battements et assurant un fonctionnement continu.

L'automatisme de la colonne est assuré par des dispositifs électroniques utilisant des programmes pour piloter les opérations par l'action d'électrovannes, en fonction de mesures en continu sur les solutions entrée et sortie (pH, potentiel Redox, température, réfraction, turbidimétrie, résistivité ou tout autre caractéristique significative).

Une évolution déterminante des régulations et automatismes est rendue possible par les conditions mêmes de fonctionnement des nouvelles colonnes partie supérieure à pression atmosphérique et partie inférieure en faible dépression (ou légère pression pour la marche à contre-courant). Ces conditions simplifient en effet considérablement le suivi en continu des diverses données physiques ou chimiques prises en compte, et permettent souvent d'assurer leur fiabilité alors que ce n'est technologiquement pas possible à haute pression.

A titre d'exemple, le composant statique réactif peut être une résine échangeuse d'ions; il retient préférentiellement et dans cet ordre trois produits organiques A, B, C dans une solution, la colonne retiendra d'abord tout le produit A, puis ensuite tout le produit B, et enfin seulement tout le produit C. On peut alors par des passages successifs sur colonne, alternant avec des élutions, séparer sans mélange le produit A, le produit B et le produit C. Il n'est bien évidemment possible de réaliser ces opérations sur le plan industriel et de les automatiser que parce que tous les filets élémentaires s'écoulant dans la colonne subissent un même temps de réaction grâce à l'élimination des écoulements préférentiels.

A titre d'autre exemple, des eaux fortement chargées en électrolytes sont traitées dans une station d'épuration comportant diverses opérations successives. L'une d'elles consiste à les soumettre à l'action d'une résine cathionique dans une colonne; la colonne est composée d'une partie cylindrique (Diamètre 2 m, hauteur 2,43 m) qui surmonte un tronc de cône dont l'angle au sommet est de 30°. Son volume est de 8 $m^3$ avec une ouverture au sommet de diamètre 0,5 m. La partie cylindrique est chargée de 5 $m^3$ de résine Amberlite IRC 120 qui occupent une hauteur de 1,59 m soit 65 % de la hauteur disponible. Le tronc de cône est rempli de trois couches de graviers siliceux de 0,33 m d'épaisseur. Les graviers sont soutenus par une plaque PVC de 0,65 m de diamètre et 10 mm d'épaisseur. Cette plaque est percée de quatre cents trous de diamètre 8 mm et recouverte d'une toile de tamis d'ouverture de maille 0,5 mm.

La résine se présente sous forme de billes de diamètre 0,7 mm, la couche inerte la plus haute sous forme de graviers 0,8 à 2 mm et les deux suivantes respectivement 2 à 5 mm et 4 à 9 mm.

En dessous de la plaque perforée se trouve un vide de 0,56 m au-dessus de la buse de sortie. On y place un croisillon polyester qui soutient la plaque. L'alimentation se fait par une tuyauterie diamètre 50 à un débit de 20 $m^3$/h permettant une vitesse d'écoulement dans la zone utile à une vitesse de 1,77 mm/s correspondant bien aux conditions requises pour l'effacité du traitement.

L'invention concerne également la technique de réalisation des colonnes pour permettre lors de leur réalisation industrielle d'optimiser leurs coûts de construction et de fonctionnement. Les matériaux durs habituellement utilisés en génie chimique (verre ou métaux) peuvent être remplacés par des matériaux moins onéreux, puisqu'il n'y a pas de contraintes mécaniques importantes dues aux pressions élevées. On peut, en particulier, choisir des matériaux ayant une certaine élasticité, tels que le polyester armé de fibres de verres, ce qui contribuera, en dehors du chargement partiel en réactif de la partie cylindrique déjà mentionné, à encaisser d'éventuelles expansions du réactif pendant le cycle de production.

La possibilité de réaliser industriellement des colonnes de grand diamètre et de faible hauteur résulte directement des particularités spécifiques des colonnes faisant l'objet de la présente invention. C'est un facteur déterminant d'économie dans le coût de construction, mais aussi dans les coûts de fonctionnement, par exemple en prolongeant la durée d'utilisation dès réactifs.

Le principe même de régularisation de l'écoulement par des couches successives de produits inertes implique l'horizontalité parfaite de ces couches et donc de la plaque qui les soutient. Son faible diamètre est un facteur favorable mais on élimine tout risque de flèche par son maintien adéquat à savoir en périphérie des équerres et suivant quatre rayons un croisillon.

Bien que l'on ait décrit et représenté une colonne conforme à l'invention ainsi que des détails de réalisation et des modalités de fonctionnement, il doit être compris que la particularité de l'invention n'est pas limitée à ces exemples particuliers mais qu'elle s'étend à tout dispositif de traitement en phase hétérogène comportant les caractéristiques générales énoncées plus haut.

## Revendications

1. Colonne de réaction du type destiné à faire passer un composant liquide, dit solution, à traiter au contact d'un composant statique solide et divisé en grains tel que catalyseur, résine échangeuse d'ions, tamis moléculaire, ou autre, ladite colonne étant essentiellement constituée d'une enceinte verticale comportant au moins deux orifices de passage de ladite solution, l'un à sa partie supérieure, l'autre à sa partie inférieure, caractérisée: en ce que la pression régnant à la partie inférieure de la colonne est sensiblement égale à la hauteur de charge de la solution dans cette dernière de telle sorte que l'écoulement de la solution à travers le composant statique résulte principalement de sa gravité, en ce que la partie inférieure (2) de ladite enceinte est d'une forme générale sensiblement conique d'ouverture de 25 à 35°, et en ce que le volume intérieur de cette partie conique est partiellement garni d'une masse de matériaux divisés inertes à l'égard de ladite solution (4), ces matériaux étant disposés en couches horizontales (6, 7, 8) constitués de particules de taille croissante de façon au moins discontinue depuis leur couche supérieure (6) jusqu'à leur couche inférieure (8), tandis que les densités des particules sont au moins égales à celles du composant statique actif (5) disposé au-dessus de la couche supérieure (6) du matériau inerte, ou de la solution, la densité des particules des couches inférieures étant au moins égale à celle des couches supérieures.

2. Colonne selon la revendication 1, caractérisée: par une hauteur libre H1 au-dessus du composant statique (5).

3. Colonne selon la revendication 2, caractérisée: en ce que la plus petite dimension des particules d'une couche est supérieure à la plus grande dimension des interstices existants entre les particules de la couche immédiatement inférieure, et en ce que la plus grande dimension des interstices existants entre les particules de la couche supérieure est inférieure à la plus petite dimension des grains du composant statique (5).

4. Colonne selon la revendication 3, caractérisée: en ce que les matériaux inertes sont divisés en trois couches de particules de granulométries différentes, la granulométrie des particules d'une même couche étant sensiblement homogène.

5. Colonne selon la revendication 3, caractérisée: en ce que les matériaux inertes sont disposés au-dessus d'une grille (22) dont les ouvertures ont des dimensions inférieures à la plus petite dimension des particules de la couche adjacente, et en ce que ladite grille repose sur un support, dit croisillon (9), constitué de plaques reliées centralement par leur tranche.

6. Colonne selon la revendication 2, caractérisée: en ce que, la partie supérieure (1) de l'enceinte étant cylindrique, le rapport de sa hauteur H à son diamètre D est au moins égal à 1,2 (H = 1,2 D).

7. Colonne selon la revendication 2, caractérisée: en ce que la surface inférieure de la couche inférieure de matériau inerte est située à une distance $h1$ de l'extrémité inférieure du cône, $h1$ étant comprise entre 0,25 D et 0,35 D.

8. Colonne selon la revendication 2, caractérisée: en ce qu'une conduite supérieure (11) et une conduite inférieure (12) raccordée axialement à l'extrémité inférieure (10) du cône, sont reliées à une vanne quatre voies (19) recevant elle-même une conduite d'arrivée (13) et une conduite de départ (14), la fonction de ladite vanne quatre voie étant de mettre, de façon alternée, en relation soit la conduite supérieure (11) avec la conduite d'arrivée (13) et la conduite inférieure (12) avec la conduite de départ (14), soit la conduite inférieure (12) avec la conduite d'arrivée (13) et la conduite supérieure (11) avec la conduite de départ (14).

9. Colonne selon la revendication 9, caractérisées: en ce que ladite colonne comporte au moins deux capteurs de présence de la solution, dits détecteurs de niveaux, l'un (20) dit de niveau haut étant situé au-dessous du débouché de la conduite supérieure dans la colonne, l'autre (21) dit de niveau bas étant situé au-dessous du dit débouché et au-dessus du niveau supérieur dudit composant statique (5).

**Patentansprüche**

1. Reaktionsturm des Typs, der dazu bestimmt ist, einen flüssigen Bestandteil, Lösung genannt, durchzulassen, sie in Kontakt mit einem statischen, festen und in Körner aufgeteilten Bestandteil wie zum Beispiel Katalysator, Ionenaustauscherharz, Molekularsieb oder andere, zu behandeln, wobei der besagte Reaktionsturm im wesentlichen aus einem vertikalen Gefäß besteht, das mindestens zwei Durchgangsöffnungen für die besagte Lösung enthält, die eine auf dem oberen Teil, die andere im unteren Teil, gekennzeichnet dadurch, daß: der im unteren Teil des Reaktionsturms herrschende Druck genau der Ladehöhe der Lösung im Reaktionsturm entspricht, so daß die Lösung den statischen Bestandteil hauptsächlich aufgrund ihrer Schwerkraft durchläuft; der untere Teil (2) des besagten Gefäßes allgemein eine deutlich konische Form aufweist, mit einem Öffnungswinkel von 25 bis 35°; und das innere Volumen dieses konischen Teils teilweise mit einer Masse zerteilter Stoffe versehen ist, die inert gegenüber der besagten Lösung sind (4), wobei diese Stoffe in horizontalen Schichten angeordnet sind (6, 7, 8) und aus Teilchen bestehen, deren Größe mindestens diskontinuierlich von der oberen Schicht (6) bis zu ihrer unteren Schicht (8) anwächst, während die jeweilige Dichte der Teilchen mindestens denen des statischen aktiven Bestandteils (5) entspricht, der oberhalb der oberen Schicht (6) des inerten Stoffes oder der Lösung angeordnet ist, wobei die Dichte der Teilchen der unteren Schichten mindestens der der oberen Schichten entspricht.

9

2. Reaktionsturm gemäß Anspruch 1, gekennzeichnet: durch eine freie Höhe H1 oberhalb des statischen Bestandteils (5).

3. Reaktionsturm gemäß Anspruch 2, gekennzeichnet dadurch, daß: das kleinste Maß der Teilchen einer Schicht die größte Größe der Zwischenräume übertrifft, die zwischen den Teilchen der unmittelbar darunterliegenden Schicht bestehen, und die größte Größe der zwischen den Teilchen der oberen Schicht vorhandenen Zwischenräume die kleinste Größe der Körner des statischen Bestandteils (5) unterschreitet.

4. Reaktionsturm gemäß Anspruch 3, gekennzeichnet dadurch, daß: die inerten Stoffe in drei Schichten aus Teilchen unterschiedlicher Granulometrie aufgeteilt sind, wobei die Granulometrie der Teilchen einer Schicht deutlich homogen sind.

5. Reaktionsturm gemäß Anspruch 3, gekennzeichnet dadurch, daß: die inerten Stoffe oberhalb eines Gitters (22) angeordnet sind, dessen Öffnungen kleiner sind als die kleinste Größe der angrenzenden Schicht, und das besagte Gitter auf einer Unterlage ruht, Kreuzkörper genannt (9), die aus Platten besteht, die zentral durch ihre Schnittfläche miteinander verbunden sind.

6. Reaktionsturm gemäß Anspruch 2, gekennzeichnet dadurch, daß: der obere Teil (1) des Gefäßes zylindrisch ist und das Verhältnis ihrer Höhe H zu ihrem Durchmesser D mindestens 1,2 entspricht (H = 1,2 D);

7. Reaktionsturm gemäß Anspruch 2, gekennzeichnet dadurch, daß: die untere Oberfläche der unteren Schicht des inerten Stoffes in einer Entfernung h1 vom untersten Ende des Kegels liegt, wobei h1 zwischen 0,25 D und 0,35 D liegt.

8. Reaktionsturm gemäß Anspruch 2, gekennzeichnet dadurch, daß: eine obere Leitung (11) und eine untere Leitung (12), die axial am unteren Ende (10) des Kegels angeschlossen ist, mit einem Vierwegeventil (19) verbunden sind, das seinerseits eine Zuleitung (13) und eine Ableitung (14) aufnimmt, wobei das besagte Vierwegeventil die Aufgabe hat, abwechselnd entweder die obere Leitung (11) mit der Zuleitung (13) und die untere Leitung (12) mit der Ableitung (14) zu verbinden, oder die untere Leitung (12) mit der Zuleitung (13) und die obere Leitung (11) mit der Ableitung (14) zu verbinden.

9. Reaktionsturm gemäß Anspruch 8, gekennzeichnet dadurch, daß: der besagte Reaktionsturm mindestens zwei Fühler für das Vorhandensein der Lösung enthält, Niveaufühler genannt, wobei der eine (20) für den oberen Pegel unterhalb der Ablauföffnung der oberen Leitung im Reaktionsturm angebracht ist und der andere (21) für den unteren Pegel unterhalb der besagten Ablauföffnung und oberhalb des oberen

10

Pegels des besagten statischen Bestandteils (5) angebracht ist.

Claims

1. A reaction column of the type intended for the passing of a liquid component, called solution, to be treated in contact with a solid static component divided into grains such as catalyst, ion, exchanger resin, molecular sieve or the like, said column being essentially formed of a vertical enclosure comprising at least two orifices for the passage of said solution, one at its upper part and the other at its lower part, characterized by the fact that: the pressure prevailing in the lower part of the column is substantially equal to the height of charge of the solution in the column so that the flow of the solution through the static component results primarily from its gravity; the lower part (2) of said enclosure is of a generally substantially conical shape with an opening of 25 to 35°, and the inner volume of said conical part is partially filled with a mass of divided materials which are inert with respect to said solution (4), said materials being arranged in horizontal layers (6, 7, 8) formed of particles of a size which increases at least discontinuously from their upper layer (6) to their lower layer (8), while the densities of the particles are at least equal to those of the active static component (5) arranged above the upper layer (6) of the inert material, or of the solution, the density of particles of lower layers being at least equal to that of upper layers.

2. A column according to claim 1, characterized by a free height H1 above the static component (5).

3. A column according to claim 2, characterized by the fact that the smallest dimension of the particles of a layer is larger than the largest dimension of the interstices present between the particles and the immediately lower level, and the largest dimension of the interstices present between the particles of the upper layer is less than the smallest dimension of the grains of the static component (5).

4. A column according to claim 3, characterized by the fact that the inert materials are divided into three layers of particles of different particle size, the particle size of the particles of the same layer being substantially homogeneous.

5. A column according to claim 3, characterized by the fact that the inert materials are arranged on top of a grating (22) the openings of which have dimensions smaller than the smallest dimension of the particles of the adjacent layer and the said grating rests on a support, called a spider (9), formed of plates which are connected centrally on their edge.

6. A column according to claim 2, characterized by the fact that the upper part (1) of the enclosure being cylindrical, the ratio of its height H to its diameter D is at least equal to 1.2 (H = 1.2 D).

7. A column according to claim 2, characterized by the fact that the lower surface of the lower layer of inert material is located at a distance h1 from the lower end of the cone, h1 being between 0.25 D and 0.35 D.

8. A column according to claim 2, characterized by the fact that an upper conduit (11) and a lower conduit (12) which is connected axially to the lower end (10) of the cone are connected to a 4-way valve (19) which, in its turn, receives an inlet conduit (13) and an outlet conduit (14), the function of said 4-way valve being alternately to place either the upper conduit (11) in communication with the inlet conduit (13) and the lower conduit (12) in communication with the outlet conduit (14) or the lower conduit (12) in communication with the inlet conduit (13) and the upper conduit (11) in communication with the outlet conduit (14).

9. A column according to claim 9, characterized by the fact that the said column comprises at least two detectors which detect the presence of the solution referred to as level detectors, the one (20), known as a high level detector, being located below the outlet of the upper conduit into the column, and the other (21), known as the low level detector, being located below the said outlet and above the upper level of the said static component (5).

EP 0 247 109 B1

1